(19) Europäisches Patentamt
European Patent Office
Office européen des brevets

(11) EP 4 067 392 A1

(12) **EUROPEAN PATENT APPLICATION**
published in accordance with Art. 153(4) EPC

(43) Date of publication:
**05.10.2022 Bulletin 2022/40**

(21) Application number: **20892110.6**

(22) Date of filing: **25.11.2020**

(51) International Patent Classification (IPC):
***C08F 8/16*** *(2006.01)* ***B33Y 80/00*** *(2015.01)*
***B29C 64/112*** *(2017.01)* ***B29C 64/40*** *(2017.01)*
***B33Y 70/00*** *(2020.01)*

(52) Cooperative Patent Classification (CPC):
**B29C 64/112; B29C 64/40; B33Y 70/00; B33Y 80/00; C08F 8/16**

(86) International application number:
**PCT/JP2020/043715**

(87) International publication number:
**WO 2021/106889 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2019 JP 2019214825**

(71) Applicant: **Mitsubishi Chemical Corporation**
**Chiyoda-ku**
**Tokyo 100-8251 (JP)**

(72) Inventors:
- **SAKAI Norihito**
  **Tokyo 100-8251 (JP)**
- **YANO Tomotake**
  **Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **SUPPORT MATERIAL FOR LAMINATE SHAPING, AND METHOD FOR MANUFACTURING LAMINATE SHAPED ARTICLE AND THREE-DIMENSIONAL STRUCTURE USING SAME**

(57) A support material used for fused deposition modeling for producing a target three-dimensional object, a fused deposition modeled structure and a method of manufacturing a three-dimensional structure using the same are provided. The support material comprises a polyvinyl alcohol-based resin modified with a hetero functional group, preferably having a hydroxyl group at the terminal. The support material is preferably filamentous. The support material structure can be removed by washing with water from a produced fused deposition modeled structure to obtain a target three-dimensional object. The wastewater generated in the production is environmentally friendly and therefore may be allowed to discharge.

【FIG. 1】

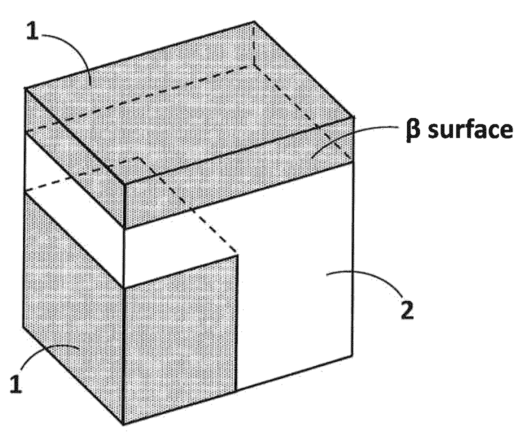


EP 4 067 392 A1

## Description

## TECHNICAL FIELD

The present invention relates to a support material having excellent adhesiveness to a target model to be created by fused deposition modeling, the support material being environmentally friendly and easily removed from the fused deposition modeled structure. The present invention also relates to the fused deposition modeled structure including a support structure made of the support material, and a method for manufacturing a three-dimensional object as the target model.

## BACKGROUND

A fused deposition modeling is a method of forming a three-dimensional object having a desired shape, in which a fluid material is extruded, solidified to form a layer, and a fluid material is extruded on top of the previous layer and solidified to create an object layer by layer. The method of manufacturing a three-dimensional object includes a UV curing method, a fused deposition modeling method, and the like. The fused deposition modeling method can be executed using a simple apparatus and is widely used.

In a fused deposition modeling for forming a three-dimensional object having a desired shape, a support material which is auxiliary for infilling a target three-dimensional object is formed during the fused deposition modeling. The support structure is a mere auxiliary part during the printing process of the target three-dimensional object, and therefore needs to be removed from the fused deposition modeled structure after the printing process.

The support structure can be removed by dissolution using a liquid (for example, disclosed by JP 2014-243295 A); scraping; or scattering and removing with a liquid or gas.

In the case of a fused deposition modeled structure having a complex shape, the target model may be damaged by scraping the support structure, and the removal work of the support structure is troublesome. In the case that a support material is removed by scattering, such a support material has typically low in strength and tends to be insufficient for supporting the model material structure.

In this respect, the removal work by dissolving the support structure in a liquid is an excellent technique because the target model without damage can be obtained despite a simple operation. In particular, polyvinyl alcohol-based resin (PVA-based resin) that is a water-soluble resin is a suitable support material. Since the PVA-based resin may be removed using water, a working environment is safe and wastewater is environmentally friendly.

On the other hand, PVA-based resin is rigid and inferior in impact resistance, and is not easy to be melt molded and fiberized. Therefore, in order to utilize PVA-based resin for a support material, flexibility and impact resistance should be imparted to the PVA-based resin. Further, in order that a PVA-based resin stably adheres to a hydrophobic resin as a model material which is a material of a three-dimensional object having a desired shape (also referred to as "target model"), hydrophobicity should also be imparted to the hydrophilic PVA-based resin. As a support material meeting the above-mentioned requirements, there is a proposal of a support material obtained by alloying a thermoplastic elastomer such as styrene-ethylene-butylene-styrene block copolymer (SEBS) with a PVA-based resin (for example, WO 2015/182681).

The proposed support material has a sea-island structure in which SEBS (island component) is dispersed in the PVA-based resin as a matrix (sea component). A waste liquid generated after dissolution of PVA-based resin in water, which is a PVA-based resin aqueous solution, is a suspension in which water-insoluble SEBS is dispersed in water. When disposing of the suspension which contains non-biodegradable SEBS, a user must make an effort not to discharge microplastics into an environment.

From the viewpoint of recent green chemistry, it has been proposed in JP 2018-099788A to use biodegradable polyester in place of non-biodegradable SEBS. Specifically, a composition containing a side chain 1,2-diol-containing PVA-based resin and a biodegradable polyester is used as a support material for fused deposition modeling.

## PRIOR ART

## PATENT DOCUMENT

[Patent Document 1] JP 2014-024329 A
[Patent Document 2] WO 2015/182681
[Patent Document 3] JP 2018-099788A

## SUMMARY OF THE INVENTION

### TECHNICAL PROBLEM TO BE SOLVED BY THE INVENTION

By the way, various resins such as acrylonitrile-butadiene-styrene (ABS) - based resin, polylactic acid (PLA)-based resin, polyethylene terephthalate, polyamide, and polycarbonate have been reviewed as a model material. ABSbased resins and PLA-based resins are widely used for general consumers because of their adequate melt-molding property, thermal stability, and mechanical properties after being solidified.

Therefore, in addition to flexibility, the PVA-based resin used for a support material is also required to have excellent adhesiveness to at least one of ABSbased resin and PLA-based resin.

With respect to the support material proposed in the Patent Document 3, the adhesiveness to the model material should be improved.

Under these circumstances, a purpose of the present invention is to provide a filamentous support material capable of forming a support structure to be removed easily and of generating an eco-friendly waste liquid, and furthermore the support material having a proper adhesiveness to model materials such as ABS resin and PLA-based resin.

### MEANS FOR SOLVING THE PROBLEM

The present inventors have been studied on various PVA-based resins, and found that a hetero functional group-modified PVA-based resin in which a hetero functional group is introduced into a PVA-based resin has flexibility with retaining water solubility inherent in PVA-based resin, and also has excellent adhesiveness to a model material, particularly a PLA-based resin. As a result of the findings, the present invention has been made.

In one aspect of the invention, a support material for fused deposition modeling comprises a hetero functional group-modified polyvinyl alcohol-based resin having a structural unit represented by a general formula (1) shown below.

[Chemical formula 1]

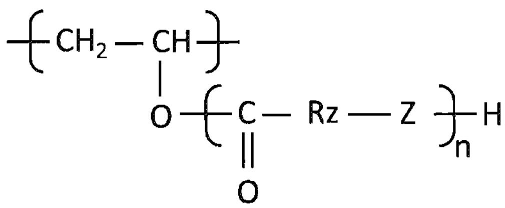

(1)

In the formula (1), Rx represents an organic chain which may have a substituent, Z is a remained part of a heteroatom-containing functional group from which a hydrogen atom is removed, and n represents a positive integer. The Z is preferably an oxygen atom.

The content of the structural unit (1) in a hetero functional group-modified polyvinyl alcohol-based resin is preferably from 0.5 to 40 mol%. The hetero functional group-modified polyvinyl alcohol-based resin may further comprise a structural unit containing a primary hydroxyl group in the side chain. The structural unit containing a primary hydroxyl group in the side chain excludes the structural unit (1). The saponification degree of the hetero functional group-modified polyvinyl alcohol-based resin is preferably from 65 to 99 mol%.

In another aspect of the invention, a method of producing a three-dimensional object with use of a support material of the invention, and a fused deposition modeled structure which is formed as an intermediate object in the manufacture of the three-dimensional object are included. The fused deposition modeled structure comprises a support structure made of the support material.

The method of producing a three-dimensional object comprises extruding a molten support material for fused deposition modeling of the invention and a molten model material, solidifying the model material and the support material to form a structure layer by layer; and bringing an obtained fused deposition modeled structure into contact with water.

The support material for fused deposition modeling is preferably in the form of filament, and the model material is preferably a polylactic acid-based resin.

### EFFECT OF THE INVENTION

The hetero functional group-modified PVA-based resin used in the invention is environmentally friendly because if the wastewater generated by the removal process is discharged in the ocean, the PVA-based resin does not cause microplastics in the ocean due to its water-solubility. Moreover, the hetero functional group-modified PVA-based resin

may satisfy the requirements to a support material, such as flexibility, shape-forming property paired with a model material and adhesiveness to the model material.

**BRIEF DESCRIPTION OF THE DRAWINGS**

FIG. 1 depicts a configuration of a fused deposition modeled structure to be formed for evaluation in Example.

**EMBODIMENT FOR CARRYING OUT THE INVENTION**

Hereinafter, the present invention will be described in detail, but the following are mere examples of desirable embodiments.

[Support material for fused deposition modeling]

A support material for fused deposition modeling of the present invention is characterized in containing a PVA-based resin modified with a heteroatom-containing functional group. This modified PVA-based resin (called as "hetero functional group-modified PVA") has a structural unit of the following formula (1) (hereinafter, may be referred to as "heteroatom-containing modified unit").

[Chemical formula 1]

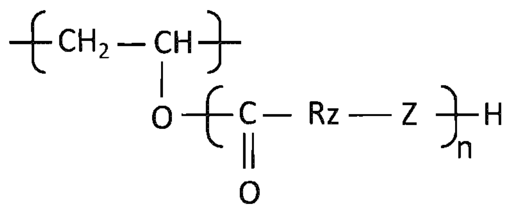

(1)

In the formula, Z is a residue obtained by removing a terminal hydrogen atom (H) from the heteroatom-containing functional group. The heteroatom-containing functional group (-ZH) is a functional group having a heteroatom (oxygen, nitrogen, sulfur, phosphorus) and having a terminal hydrogen, for example, hydroxyl group (-OH), mercapto group (-SH), amino group ($-NH_2$), carboxyl group (-COOH), phosphono group ($-H_2PO_3$) and the like. Among these, hydroxyl group is preferable because a resulting hetero functional group-modified PVA-based resin is excellent in water solubility, adhesion to a model material, stability of the heteroatom-containing functional group, and the like. In the case of a hydroxyl group, Z represents an oxygen atom.

In the formula, Rz is an organic group having from 2 to 14 carbon atoms which links the heteroatom-containing functional group to the carbonyl group. The organic group may have a substituent. A preferable organic group is a hydrocarbon chain having from 1 to 10 carbon atoms, such as an alkylene group having a linear or branched structure, an aromatic ring such as a phenylene group, or an alicyclic hydrocarbon chain such as a cycloalkylene group, and the like. As the hydrocarbon chain, a linear or branched alkylene group having from 3 to 8 carbon atoms such as methylene, ethylene, propylene, isopropylene, butylene and isobutylenep is preferable, and a linear alkylene chain having from 3 to 7 carbon atoms is more preferable.

In the formula, n is a positive integer, preferably an integer of 1 to 10, more preferably of 1 to 5, and even more preferably an integer of 1 to 3. A heteroatom-containing modified unit where n is an integer of 2 or more may be obtained by modifying a PVA-based resin with an oligomerized modifier or by polymerizing a monomeric modifier after introduction of the monomeric modifier, as described later.

The afore-mentioned hetero functional group-modified PVA-based resin may usually be produced by (i) charging a catalyst and a modifier which donates a modified portion in a heteroatom-containing modified unit (1), to an extruder where a raw material PVA-based resin contains, and grafting the modifier on the PVA-based resin through a reaction between them; or (ii) adding a modifier donating a modified portion of a heteroatom-containing modification unit to a solution of a raw material PVA-based resin, and reacting the mixture. In terms of reaction efficiency, the method (i) is preferably used.

Examples of the catalyst include a metal catalyst. The metal catalyst is commonly used for a ring-opening polymerization of a cyclic compound having a heteroatom-containing functional group, a nucleophilic substitution reaction of a carboxylic acid compound, or a dehydration condensation reaction.

Examples of the metal catalyst include titanium-based compounds, tinbased compounds, aluminum-based compounds, iron-based compounds, zirconium-based compounds, zinc-based compounds, lead-based compounds and

the like. In particular, titanium alkoxides such as tetra-n-butoxytitanium, tetraisobutoxytitanium and tetraisopropoxytitanium, tin alkoxides such as dibutyldibutoxytin, and tin ester such as dibutyltin diacetate and tin 2-ethylhexanoate (II). Of these, a tin ester is preferable, and tin 2-ethylhexanoate (II) is preferable from the viewpoint of affinity with a compound having a heteroatom-containing functional group.

Hereinafter, the modifier and the raw material PVA-based resin will be described.

<Modifier>

The modifier is a compound in which an OH-reactive group and a functional group ZH having a heteroatom are linked via a linking chain Rz, as shown below. The OH-reactive group may react with a hydroxyl group of a raw material PVA-based resin to form an ester bond. In the functional group ZH, H is a hydrogen atom and Z is a remained part of the heteroatom-containing functional group from which a terminal hydrogen atom is removed. The OH-reactive group and ZH may be condensed to form a cyclic structure.

[Chemical formula 5]

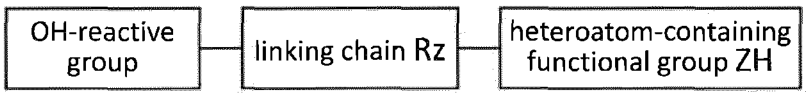


The OH-reactive group is a group containing a carbonyl subject to a nucleophilic attack by an oxygen constituting the hydroxyl groups in the raw material PVA-based resin. Specific examples of the OH-reactive group include carboxyl group (-COOH), carbohalide (-COHal wherein Hal represents a halogen), ester bond, amide bond, imide, cyclic urea, N-acyl-substituted carbonyl group, carbonate bond and the like. Of these, a carboxyl group (-COOH), a carbohalide (-COHal wherein Hal represents a halogen), and an ester bond are preferable from the viewpoint of high nucleophilic reactivity by a raw material PVA-based resin.

Examples of the heteroatom-containing functional group (-ZH) and the linking chain Rz include those listed respectively for the heteroatom-containing functional group (-ZH) and the linking chain Rz in the formula (1). In addition, the OH-reactive group and the heteroatom-containing functional group may be condensed to form a cyclic compound of a modifier.

Examples of the cyclic compounds include cyclic esters such as lactones; cyclic amides such as lactams; cyclic carbonates such as ethylene carbonate and propylene carbonate; cyclic thioesters such as thioethane-2-one, 3,3-dimethylthiethan-2-one, 4-methylthiethan-2-one, 3-methylthiethan-2-one, 3-ethylthiethan-2-one and 3-methyl-3-ethylthiethan-2-one; cyclic carbamate such as ethylene carbamate; imide compounds such as phenylphthalimide and cyclohexanedicarboxyimide; cyclic urea derivatives such as N, N'-dimethylpropylene urea and 1,3-dimethyl-2-imidazolidisone; cyclic N, N'-diacyl compounds such as N-acyl-substituted caprolactam. Among these, cyclic esters are preferable, and lactones are more preferable.

Hereinafter, specific examples of the preferable modifier will be listed. (a) Cyclic ester (lactone)

The lactone is a cyclic compound formed by a condensation between a carboxyl group as a hydroxyl-reactive group and a hydroxyl group as a heteroatom-containing functional group. The linking chain Rz is an alkylene group having from 2 to 14 (preferably 2 to 10, more preferably 2 to 8) carbon atoms. Preferable lactones include β-propiolactone, γ-butyrolactone, ε-caprolactone, δ-valerolactone and the like. From the viewpoint of reactivity, ε-caprolactones and δ-valerolactones are preferable, and from the viewpoint of material cost and availability, ε-caprolactone is more preferable. The following lactones may be used alone or in combination of two or more.

Examples of β-propiolactones include β-propiolactone and dimethylpropionlactone.

Examples of γ-butyrolactones include butyrolactone, γ-valerolactone, γ-caprolactone, γ-caprilolactone, γ-laurolactone, γ-palmitolactone, γ-stearolactone, crotonolactone, α-angelica lactone and β-angelica lactone.

Examples of ε-caprolactones include monoalkyl-ε-caprolactones such as ε-caprolactone, monomethyl-ε-caprolactone, monoethyl-ε-caprolactone, monodecyl-ε-caprolactone and monopropyl-ε-caprolactone; dialkyl-ε-caprolactone in which two alkyl groups are added to carbon atom(s) other than ε position carbon atom; trialkyl-ε-caprolactone in which three alkyl groups are added to carbon atom(s) other than ε position carbon atom; alkoxy-ε-caprolactone such as ethoxy-ε-caprolactone; cycloalkyl-lactones such as cyclohexyl-ε-caprolactone; aralkyl-ε-caprolactone such as benzyl-ε-caprolactone; aryl-ε-caprolactone such as phenyl-ε-caprolactone.

Examples of the δ-valerolactones include 5-valerolactone, 3-methyl-5-valerolactone, 3,3-dimethyl-5-valerolactone, 2-methyl-5-valerolactone, and 3-ethyl-5-valerolactone and the like.

When a lactone is used as a modifier, an OH-reactive group generated by ring-opening of the lactone reacts with an OH group in the raw material PVA-based resin to form an ester bond. In a specific condition for the reaction, a ring-opening polymerization of the modifier may proceed. In this case, n in the structural unit (1) is 2 or more, which

means that the structural unit contains a plurality of heteroatom-containing functional group residue Zs.

(b) Carboxylic acid and its derivatives

In a preferable modifier containing a OH-reactive group and a heteroatom-containing functional group separately, a carbonyl group subject to a nucleophilic attack is contained as the hydroxyl-reactive group and hydroxyl, amino or mercapto is contained as the heteroatom-containing functional group, respectively in the modifier. Examples of such modifier include a carboxylic acid having a heteroatom-containing functional group as a substituent, and its derivatives such as a carboxylic acid ester, a carboxylic halide, and a carboxylic anhydride. In the case of a carboxylic acid ester, an alkyl group constituting the ester is an alkyl group having 1 to 13 carbon atoms, preferably 1 to 10 carbon atoms, and more preferably a lower alkyl group having 1 to 6 carbon atoms. The alkylene group (corresponding to the linking chain Rz) constituting the main chain of the carboxylic acid is an alkylene group having from 1 to 13 carbon atoms, preferably from 1 to 10 carbon atoms, more preferably a lower alkylene group having from 1 to 6 carbon atoms. The alkylene group may have a substituent as long as it does not affect the heteroatom-containing functional group.

Examples of the carboxylic acid and its derivative include a hydroxycarboxylic acid containing hydroxyl group as the heteroatom-containing functional group, and its derivatives; an amino acid containing an amino group as the heteroatom-containing functional group, and its derivatives; a mercaptocarboxylic acids containing a mercapto group as the heteroatom-containing functional group, and its derivatives.

Examples of the hydroxycarboxylic acid or its derivative include butyl 2-hydroxyacetate and ethyl 3-hydroxypropionate. Examples of the amino acid or its derivative include glycine, alanine, valine and the like. Examples of the mercaptocarboxylic acid and its derivative include thiolactic acid, thioglycolic acid and the like.

(c) Oligomer or polymer each having a heteroatom-containing functional group

A modifier may be an oligomer or polymer each having a plurality of heteroatom-containing functional group residue Zs. Such modifier may provide a modified structural unit represented by the formula (1) wherein n is an integer of 2 to 10, preferably an integer of 2 to 5.

Examples of the oligomer or polymer type modifier include polyesters such as poly-ε-caprolactone and polylactic acid, polyamides such as poly-ε-caprolactam, and polythioesters.

<Raw material PVA-based resin>

As the raw material PVA-based resin to be reacted with the afore-mentioned modifier, either unmodified PVA or modified PVA-based resin (excluding hetero functional group-modified PVA-based resin) may be used.

(a) Unmodified PVA-based resin

An unmodified PVA-based resin usable in the present invention refers to a PVA-based resin substantially composed of the following structural units (2) and (3).

[Chemical formula 2]

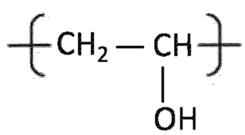

(2)

[Chemical formula 3]

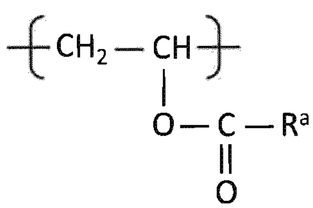

(3)

A vinyl alcohol unit (2) and a vinyl ester unit (3) both are derived from a vinyl ester compound used as a monomer making up the PVA-based resin. The vinyl ester unit is contained in a polyvinyl alcohol having a saponification degree of less than 100%.

Examples of the vinyl ester compound as a monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like. Of these, vinyl acetate is preferably used because of economy.

Therefore, in the formula (3), $R^a$ is an alkyl group having from 1 to 18 carbon atoms and depends on the vinyl ester compound used for synthetizing the raw material PVA-based resin. $R^a$ is preferably a methyl group, and a preferred vinyl ester unit is vinyl acetate unit represented by the formula (3a).

[Chemical formula 3a]

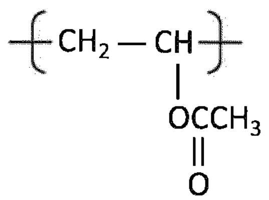

(3a)

A typical PVA-based resin has a main chain consisting of 1,3-diol bond in a bond mode. The content of 1,2-diol bond in the main chain is from about 1.5 to 1.7 mol%. The 1,2-diol bond may contribute to enhancement of the adhesiveness to a model material, and therefore the higher content of the 1,2-diol bond is more preferable. The content of 1,2-diol bond in a PVA-based resin may be increased up to 1.8 mol% or more, and still up to 2.0 to 3.5 mol%, by rising a temperature in a polymerization process of the vinyl ester compound.

(b) Modified PVA-based resin

A modified PVA-based resin usable as a raw material PVA-based resin may be a PVA-based resin having a primary hydroxyl group in the side chain thereof (e.g., a PVA-based resin having a 1,2-diol structure in the side chain and a hydroxymethyl group-containing PVA-based resin having a vinylidene-type 1,3-diol structure in the main chain thereof), olefin-modified PVA-based resin (e.g., ethylene-modified PVA-based resin and propylene-modified PVA-based resin), oxyalkylene-modified PVA-based resin (e.g., ethylene oxide-modified PVA-based resin and propylene oxide-modified PVA-based resin) or the like. Among them, a PVA-based resin having a primary hydroxyl group in the side chain is preferable in terms of melt-molding property and filament stability. In particular, a PVA-based resin having a 1,2-diol structure in the side chain (which is referred as "side chain 1,2-diol-containing PVA-based resin") is preferable.

The side chain 1,2-diol-containing PVA-based resin is a PVA-based resin having a structural unit represented by the following formula (4).

[Chemical formula 4]

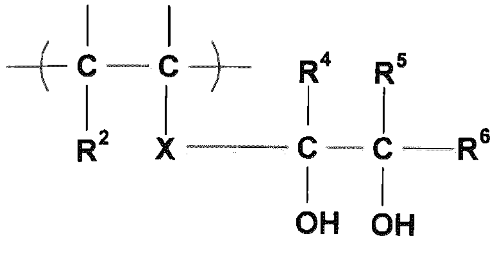

(4)

In the formula (4), $R^1$ through $R^6$ are alkyl groups each having from 1 to 4 carbon atoms such as methyl, ethyl, n-propyl, isopropyl, n-butyl, isobutyl, tert-butyl. The alkyl group may have a substituent such as halogen, hydroxyl, ester group, carboxylic acid group or sulfonic acid group.

All of $R^1$ through $R^6$ may be identical or different from each other, but preferably all of them are hydrogen atoms. When all of them are hydrogen atoms, the terminal of the side chain is a primary hydroxyl group.

In the formula (4), the binding chain (X) may be a hydrocarbon group such as alkylene, alkenylene, alkynylene, phenylene or naphthylene, wherein these hydrocarbon groups may contain a halogen substituent such as a fluorine, chlorine or bromine atom. Alternatively, the binding chain (X) may be -O-,$-(CH_2O)_m-$, $-(OCH_2)_m-$, $-(CH_2O)_mCH_2-$, -CO-, -COCO-, -CO(CH2)mCO-, - $CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, - $OTi(OR)_2O-$, -Al(OR)-, -OAl(OR)-, -OAl(OR)O-, or the like, wherein R is an substituent independently, a preferable R is hydrogen atom or an alkyl group, and m is an integer of 1 to 5.

X is preferably a single bond or an alkylene group having 6 or less carbon atoms (in particular, methylene group) or $-CH_2OCH_2-$ in terms of stability during the production or use. Among them, the single bond is most preferable in terms of thermal stability and stability under a high temperature and in an acidic condition. Therefore, the most preferable structural unit (4) is the side chain 1,2-diol-containing unit represented by the following formula (4a).

[Chemical formula 4a]

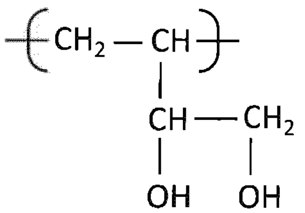

(4a)

The content of the structural unit (4) (in particular, the side chain 1,2-diol-containing unit) in the modified PVA-based resin having a primary hydroxyl group in the side chain, is usually from 0.1 to 20 mol%, preferably 0.5 to 15 mol%, more preferably 1 to 10 mol%, and particularly preferably 2 to 8 mol%.

(A) Hetero functional group-modified PVA-based resin

A hetero functional group-modified PVA-based resin obtainable by modifying a said raw material PVA-based resin with a said modifier contains a heteroatom-containing modifying unit (1) and a vinyl alcohol unit (2), and may further contain a vinyl ester unit (3) if a saponification degree of the hetero functional group-modified PVA-based resin is less than 100%, and a modified unit derived from a raw material PVA-based resin if the raw material PVA-based resin is a modified one. If a raw material PVA-based resin is a side chain 1,2-diol-containing PVA-based resin, a resulting hetero functional group-modified PVA-based resin will contain a side chain 1,2-diol-containing unit (4) derived therefrom.

A saponification degree of the hetero functional group-modified PVA-based resin corresponds to that of the raw material PVA-based resin used, and is usually from 65 to 99 mol%, preferably 70 to 99 mol%, and more preferably 70 to 90 mol%, still more preferably 72 to 90 mol%, and particularly preferably 72 to 78 mol%. If the saponification degree is too low, the solidification speed of the hetero functional group-modified PVA-based resin tends to be slow, and the shape retainabilty in a fused deposition process tends to be lowered. If the saponification degree is too high, water solubility of the hetero functional group-modified PVA-based resin tends to decrease, and the adhesiveness to the model material also tends to decrease. The saponification degree is measured in accordance with JIS K 6726.

An average polymerization degree of the hetero functional group-modified polyvinyl alcohol resin is usually 200 or more, preferably 250 or more, and more preferably 300 or more, but usually 2000 or less, preferably 1000 or less, and more preferably 600 or less. The average polymerization degree is measured in accordance with JIS K6726 and corresponds to a "number average polymerization degree". If the average polymerization degree is too low, a shape cannot be retained during the printing process, and if the average polymerization degree is too high, the effects of the invention may not be obtained.

The content of the heteroatom-containing modified unit (1) in the hetero functional group-modified vinyl alcohol-based resin, which is referred to as "hetero modification percentage", may be calculated by the following equation. In the equation, "a" is a number of vinyl alcohol unit (2), "b" is a number of vinyl acetate unit (3), and "c" is a number of heteroatom-containing modified unit (1).

[Equation 1]

$$\text{hetero modification percentage(mol\%)} = \frac{c}{a+b+c} \times 100$$

In the case that a side chain 1,2-diol-containing PVA-based resin is used as the raw material PVA-based resin, the hetero modification percentage may be calculated by the following equation. In the equation, "d" is a number of the structural unit (4) contained in the side chain 1,2-diol-containing PVA-based resin.

[Equation 2]

$$\text{hetero modification percentage (mol\%)} = \frac{c}{a+b+c+d} \times 100$$

A content of each structural unit can be calculated from integrated value of a methine peak in the structural unit, based on NMR spectrum obtained by nuclear magnetic resonance spectroscopy. The hetero functional group-modified polyvinyl alcohol resin may have a hetero modification percentage of 0.5 to 40 mol%, more preferably 0.5 to 10 mol%, and particularly preferably 2 to 6 mol%, where the hetero modification percentage is calculated in accordance with the calculation shown above. A hetero functional group-modified polyvinyl alcohol-based resin having an unduly low hetero modification percentage may be insufficient in flexibility. A hetero functional group-modified polyvinyl alcohol-based resin having an unduly high hetero modification percentage tends to have low water solubility and low adhesiveness to a model material. Low adhesiveness causes difficulty in creating an object layer by layer.

A hetero functional group-modified PVA-based resin having above-mentioned characteristics commonly has an undetected melting point, or a melting point of at most 180 °C, preferably from 110 to 170 °C, and particularly preferably 130 to 150 °C. If the melting point is too high, a high temperature should be set for extrusion of the support material, which may affect a model structure. On the other hand, if the melting point is too low, a shape retainability during fused deposition modeling tends to be lowered.

The hetero functional group-modified polyvinyl alcohol-based resin contained in the support material is not limited to one type, and may be a mixture of two or more types. In the case of the mixture, either a combination of two types of hetero functional group-modified polyvinyl alcohol-based resins having different heteroatom-containing modification units or a combination of hetero functional group-modified polyvinyl alcohol-based resins derived from a different raw material PVA-based resins may be used. When using different type of raw material PVA-based resins, a combination of PVA-based resins differing in saponification degree or average polymerization degree may be used. Combinations of hetero functional group-modified PVA-based resins, such as a combination of PVAs modified with a different modifier and a combination of PVAs having a different modification percentage, can be used as long as the characteristics as the support material are not impaired.

<Other ingredients>

A support material of the present invention may contain an ingredient other than the hetero functional group-modified polyvinyl alcohol-based resin (A) in an amount of less than 50% by weight.

(B) Another thermoplastic resin

A thermoplastic resin other than the hetero functional group-modified polyvinyl alcohol-based resin (A), which is referred to as "another thermoplastic resin", may be contained. A preferable another thermoplastic resin has biodegradability so as not to impair biodegradability of the support material of the invention. Another thermoplastic resin may be a biodegradable plastic, a PVA-based resin which is not modified with hetero functional groups, or the like.

The content of another thermoplastic resin in the support material is less than 50% by weight, preferably 48% by weight or less, more preferably 45% by weight or less, still more preferably 20% by weight or less, and 10% by weight or less.

(C) Biodegradable filler

Since a support material is extruded commonly in the form of filament from a head (hot end) of a fused deposition modeling apparatus, a preferable support material has an appropriate rigidity. Therefore, the support material preferably contains a filler, more preferably biodegradable filler without impairing the purpose of the invention.

Examples of the biodegradable filler include starch, silica, mica, montmorillonite, carbon charcoal, talc, glass fiber and the like. An average size of the filler is usually from 0.5 to 50 $\mu$m, more preferably 10 to 30 $\mu$m, and particularly preferably 5 to 20 $\mu$m. Unduly small-sized filler tends to be difficult to be kneaded into the resin. Unduly large-sized filler tends to provide a printed product with a relatively rough surface and reduced strength. The average size in the specification means a particle size $D_{50}$ measured by a laser diffraction method.

The content of the filler in a support material is preferably from 1 to 40% by weight, more preferably 2 to 30% by weight, and particularly preferably 3 to 10% by weight. Unduly small content of the filler may not exert an effect of the filler. Unduly large content of the filler may decrease strength of the support material and surface smoothness of a support material in the form of strand or filament.

(D) Plasticizer

In general, since strand or filament wound around a reel is supplied for fused deposition modeling, a strand-like or filamentous support material is extruded onto a print bed. If the support material has an insufficient flexibility, a strand-like or filamentous support material cannot follow a motion of a nozzle during the printing process, which results in damaging the strand-like or filamentous support material. Also, a filamentous support material may be damaged during reel rewinding which is a process of manufacturing the filamentous supporting material. A plasticizer may impart flexibility to a support material and therefore prevent damage of the filamentous support material, which is preferred. Examples of the plasticizer to be added to the support material include glycerin, polyethylene glycol (PEG) or the like.

On the other hand, in order to stably feed a filamentous support material with a 3D printer, a smaller content of the plasticizer is better. For these reasons, a preferable content of the plasticizer is 20% by weight or less, preferably 10% by weight or less, more preferably 1% by weight or less, and particularly preferably 0.1% by weight or less.

(E) Another additive

In addition to the above-mentioned ingredients, a known additive such as antioxidant, colorant, antistatic agent, ultraviolet absorber, lubricant, or another thermoplastic resin may be appropriately added. However, these additives are preferably biodegradable so as not to impair disposability and environmental compatibility of a support material of the invention.

A support material of the invention may be provided as a pellet-like composition obtained by adding a predetermined amount of the ingredients, kneading in a heat-melted state with a twin-screw extruder to a homogenous mixture. Preferably, a support material is provided as a filamentous support material wound around a reel, which is produced by melt-kneading a pellet-like composition of the support material, extruding the kneaded composition into a filament with a single-screw extruder and being cooled, and followed by winding the filament around a reel.

Specifically, a pelletized support material composition with the twin-screw extruder is melt-kneaded and extruded in the form of filament having a diameter of 1.5 to 3.0 mm through a single- or multi-hole strand die of the single-screw extruder. The extruded filamentous support material is solidified by air cooling, and then wound around a reel for providing in a marketplace. Such a filamentous support material is convenient because it can be fed out from the head paired with a model material in a fused deposition modeling. Afilamentous support material needs to have a flexibility and toughness sufficient to sustain the reel winding operation, and have a rigidity sufficient for delivering to the head without delay during fused deposition process. The support material of the invention can meet these requirements.

[Manufacturing method of fused deposition modeled structure and three-dimensional object]

A fused deposition modeled structure is obtained in the manufacture of a target model that is a three-dimensional object having a desired shape. A support structure made of a support material of the invention is integrally configured with a model structure (target model) in the fused deposition modeled structure.

A method of manufacturing a three-dimensional object of the invention is a method for forming a target model that is a three-dimensional object having a desired shape by a fused deposition modeling in which an inventive support material is used. The method comprises extruding the support material and a model material used for the target model both in a molten state, and solidifying them to form a fused deposition modeled structure; and bringing the fused deposition modeled structure into contact with water.

As the model material, a thermoplastic resin that can be melt-molded and a resin composition thereof may be used. For example, polylactic acid (PLA), acrylonitrile-butadiene-styrene copolymer (ABS), polyamide (PA), polycarbonate (PC), polyethylene terephthalate (PET), glycol-modified polyethylene terephthalate (PETG), polyhydroxyalkanoate (PHA), wood-filled composite, metal-filled composite, carbon fiber-filled composite, polyvinyl butyral (PVB), thermoplastic elastomer (TPE), thermoplastic polyurethane (TPU), polyolefin, polypropylene (PP), acrylonitrile styrene acrylate (ASA), polyacrylate, polymethacrylate, polystyrene (PS), polyoxymethylene (POM), and mixtures thereof may be used.

PLA, ABS, and PC are preferably used as a model material, because the support material of the invention can effectively support these model material structures in the formation by fused deposition modeling. In particular, PLA and ABS are preferable model materials because the support material of the invention has excellent adhesiveness to them.

PLA is more preferable model material because of excellent adhesiveness to a variety of hetero functional group-modified PVA-based resins.

An apparatus used in an inventive method of manufacturing a three-dimensional object may be a fused deposition modeling type apparatus equipped with a plurality of nozzle heads for extruding molten model material and support material independently. The fused deposition modeling type apparatus include a dual head type 3D printer such as Creator manufactured by FlashForge, Eagleed manufactured by Rays Enterprises, and MBot Grid II manufactured by 3D Systems.

The support material is provided preferably in the form of strand-like or filament wound around a reel. The model material is also supplied preferably in the form of strand-like or filament to the fused deposition modeling apparatus. The model material and the support material are independently heated and melted at the nozzle head, extruded onto a print bed to form a structure layer by layer.

A temperature of the head may be an appropriate temperature for melting the support material and the model material, and may be appropriately selected depending on types of the support material and model material, in particular, their melting points or melting temperatures. A common temperature set for the head (hot end) is in the range of 150 to 220°C.

Non-limiting condition for melt extrusion is usually in a condition of a pressure of 200 to 1000 psi and a stacking pitch of 100 to 350 μm.

A melt-extruded support material and model material are solidified by cooling, and a subsequently melt-extruded support material and model material are laid on top of the previous layer of solidified support material and model material. Thus produced structure or fused deposition modeled structure includes a target model made of the model material.

The step of bringing a fused deposition modeled structure into contact with water is a step of removing the support structure by water from the fused deposition modeled structure composed of a target model and the support structure. This removal process may be conducted by immersing the fused deposition modeled structure in water or by washing the fused deposition modeled structure with flowing water. In order to shorten the immersion period for dissolving the support structure, the water may be stirred or exposed to a ultrasonic wave. The water used in the removal process may have a temperature of preferably about 25 to 80°C. An amount of water or warm water used for the dissolution is about from 10 to 10000 times as much as the weight of the support structure.

Even a three-dimensional object (target model) having a complex shape with overhangs can be obtained by the removal of the support structure from the fused deposition modeled structure.

## EXAMPLES

Hereinafter, the present invention will be described in more detail with reference to examples, but the present invention is not limited to the following examples as long as the gist of the present invention is not exceeded. In the example, "part" means a weight basis.

[Method for measurement and evaluation]

1. Characteristics of hetero functional group-modified PVA

1-1 Saponification degree (mol%)

A saponification degree is measured in accordance with JIS K 6726, and a saponification degree of a raw material PVA-based resin used for a hetero functional group-modified PVA is applied to that of the hetero functional group-modified PVA.

1-2 Average polymerization degree

An average polymerization degree of the raw material PVA-based resin used for the hetero functional group-modified PVA is applied.

The average polymerization degree of the raw material PVA-based resin is a number average polymerization degree measured in accordance with JIS K 6726.

1-3 Hetero modification percentage (mol%) and graft chain length

A hetero modification percentage (mol%) was calculated from the equation below. The content rate "a" of the vinyl alcohol unit (2), the content rate "b" of the vinyl acetate unit (3a), the content rate "c" of the heteroatom-containing modified unit (1a), and the content rate "d" of the side chain 1,2-diol modification unit were determined, based on the

amounts of methylene proton of PVA, proton of the residual acetate group of PVA, α methylene proton of the carbonyl group contained in the caprolactone chain grafted to the main chain, ring-opened body of ε caprolactone, the remaining unreacted ε caprolactone, and hydroxyl group proton. These amounts were calculated from $^{1}H$-NMR chart obtained with nuclear magnetic resonance spectroscopy (Bruker Ascend™ 400 NMR spectrometer) and $^{13}C$-NMR chart measured under the following conditions.

Further, an amount of the terminal carbon atom (x) of the graft caprolactone chain and an amount of the terminal carbon atom (y) of the grafted repetitive caprolactone in the heteroatom-containing modification unit (1a) are determined to calculate the graft chain length. The graft chain length corresponds to an average polymerization degree (n) of the caprolactone.

$^{1}H$-NMR measurement conditions

Deuterated solvent: dimethyl sulfoxide-d6
Concentration at measurement: 5% by weight
Temperature at measurement: 50°C
Accumulation number: 16 (count)

$^{13}C$-NMR measurement conditions (reverse gate decoupling method, relaxation time of 2 seconds)

Solvent: dimethyl sulfoxide-d6
Concentration at measurement: 5% by weight
Temperature at measurement: 80°C
Accumulation number: 4096 (count)

[Chemical formula 1a]

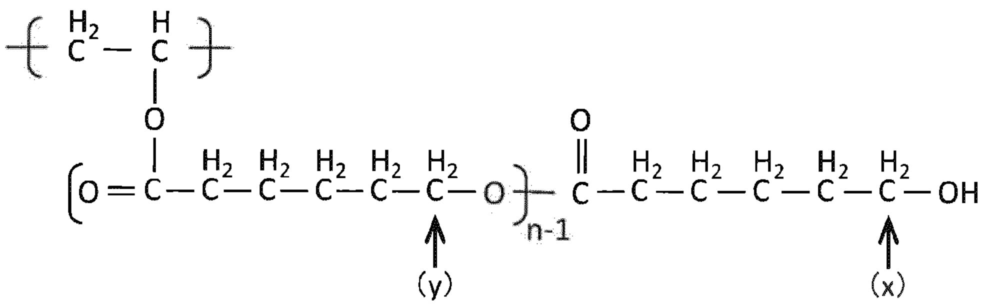

(1a)

[Equation 2]

$$\text{hetero modification percentage (mol\%)} = \frac{c}{a+b+c+d} \times 100$$

2. Characteristics of support material

2-1 Shape-forming property

A support material (filament) prepared above and a model material (PLA, ABS, or PC filament) were set in a 3D printer (FDM-200HW-X manufactured by Ninjabot), and extruded to form a structure shown in Fig. 1 on a print bed. The structure formed by fused deposition modeling consists of an L-shaped model structure 2 made of the model material and a support structure 1 made of the support material as an auxiliary structure in Fig. 1. Shape-forming property was evaluated in accordance with the following criteria based on states of the structure during and after the fused deposition modeling.

○: Fused deposition modeled structure was completed as shown in FIG. 1,
△: A fused deposition modeled structure was obtained, but an incomplete portion or defect was made due to warping, partial de-bonding, or poor corner formation,
×: Fused deposition modeling failed due to failure in deposition of one material layer on top of another material layer or incomplete modeling on the print bed

2-2 Adhesive strength to model material

The interface (β surface) between the support structure and L-shaped model structure was peeled off by hand, and the adhesiveness was evaluated according to the following criteria. If the adhesive strength is insufficient, a configuration of the produced fused deposition modeled structure may be unstable.

S: Difficult to peel off by hand,
G: A necessary adhesive for the formation of a target object is assured, and β surface is easily peeled off by hand,
-: Evaluation was not conducted because an L-shaped model structure could not be obtained.

2-3 Flexibility

A prepared support material (filament) was wound around a rod with a diameter of 15 mm by hand for 10 turns, the number of folds was counted, and a fold percentage was calculated as follows.

$$\text{Fold percentage (\%)} = \text{number of folds / number of turns x 100}$$

2-4 water solubility

A prepared support material (filament) was cut into pellets each having a length of 5 mm. 5 g of the pellets were immersed in 500 ml of water (80°C), stirred with a stirrer, and the time period (minutes) until a contour of the pellet could not be visually confirmed was measured. The stirring time period was at most 120 minutes.

[Synthesis of hetero functional group-modified PVA-based resin]

1. Raw material PVA-based resin

As a raw material PVA-based resin, the following two types of unmodified PVAs and side chain 1,2-diol-containing PVA were used.

UM1: Unmodified PVA having an average polymerization degree of 550 and a saponification degree of 72 mol%
UM2: Unmodified PVA having an average polymerization degree of 550 and a saponification degree of 88 mol%
GM: Side chain 1,2-diol-containing PVA

The side chain 1,2-diol-containing PVA having a structural unit (4a) has a polymerization degree of 450, a saponification degree of 99 mol%, and a content of the unit (4a) of 5.7 mol%.

2. Modifier

ε-caprolactone (PLACCEL M manufactured by Daicel Corporation) was used as a modifier.

3. Hetero functional group-modified PVA-based resins A1 through A4

A twin-screw extruder (manufactured by TECHNOVEL CORPORATION., L / D = 60, 15 mmϕ) which is equipped with a screw having three kneading parts and an inlet for supplying monomer was used for the synthesis of a hetero functional group-modified PVA-based resin. 100 parts of a raw material PVA-based resin shown in Table 1 was charged from an inlet for raw material, ε-caprolactone containing $Sn(Oct)_2$ as a catalyst was continuously fed through an inlet for monomer, and kneaded at 230°C in the extruder (screw rotation speed: 200 rpm). The amounts of the catalyst and ε-caprolactone are shown in Table 1.

The kneaded resin was pelletized by discharging the resin in the form of strand while being air-dryed, thereafter cutting the strand with a fan cutter. Pellets A1 through A4 differ in hetero modification percentages or graft chain lengths depending on a kind of raw material PVA or a modification condition. Table 1 shows reaction ratios of the modifier to the raw material PVA-based resin, and contents of respective structural units contained in the obtained hetero functional group-modified PVA.

[Table 1]

| hetero functional group-modified PVA | raw material PVA | | | | modification condition | | | hetero functional group-modified PVA | | | | |
|---|---|---|---|---|---|---|---|---|---|---|---|---|
| | type | saponification degree (mol%) | polymerization degree | amount (part) | caprolactone amount (part) | catalyst content (%) (per caprolactone) | monomer reaction ratio (%) | a unit content | b unit content | c unit content | d unit content | graft chain length (n) |
| A1 | unmodified (UM1) | 72 | 550 | 100 | 10 | 3 | 89 | 68.2 | 27.4 | 4.4 | 0 | 1.0 |
| A2 | unmodified (UM2) | 88 | 550 | 100 | 10 | 3 | 94 | 84.0 | 12.4 | 3.6 | 0 | 1.1 |
| A3 | side chain 1,2-diol-containing (GM) | 99 | 450 | 100 | 10 | 1 | - 95 | 90.0 | 1.0 | 3.3 | 5.7 | 1.1 |
| A4 | unmodified (UM2) | 88 | 550 | 100 | 50 | 3 | 99 | 76.3 | 11.0 | 11.0 | 0 | 2.0 |

[Production and evaluation of support materials]

Support material Nos. 1 through 4:

Each of the prepared hetero functional group-modified PVA (A1-A4) is supplied to a single-screw extruder, melt-kneaded under the following condition, extruded into a strand having a diameter of 1.75 mm, air-cooled on a belt, and wound around a reel, thereby obtaining a filamentous support material. The obtained support material was evaluated for shape-forming property, adhesive strength, flexibility, and water solubility by afore-mentioned evaluation methods. The evaluation results are shown in Table 2.

Single-screw extruder (TECHNOVEL CORPORATION): 20 mmϕ, L/D=24, "SZW20GT-24MG-STD"
Extrusion temperature pattern: C1/C2/C3/H/A/D=160/180/190/190/190/190°C Rotation speed: 20 rpm
Discharge rate: 1.0 kg/hour

Support material Nos. 5 through 7:

PVA-based resins UM1, UM2, and GM as the raw material PVA-based resin were supplied to the single-screw extruder in the same manner as the support material No. 1 to obtain filamentous support material Nos. 5 through 7 respectively. The obtained support material was evaluated with respect to shape-forming property, adhesive strength, flexibility, and water solubility by the afore-mentioned evaluation methods. The results are shown in Table 2.

[Table 2]

| support material No | PVA | | | Evaluation | | | | | | | | |
|---|---|---|---|---|---|---|---|---|---|---|---|---|
| | type | saponification degree | hetero modification percentage (mol%) | shape-forming property | | | adhesive strength of β surface | | | flexibility | | water solubility (40°C) time period for dissolution (min) |
| | | | | PLA | ABS | PC | PLA | ABS | PC | number of fold (count) | fold percentage (%) | |
| 1 | A1 | 72 | 4.4 | ○ | ○ | ○ | S | S | S | 0 | 0 | 92 |
| 2 | A2 | 88 | 3.6 | ○ | ○ | ○ | S | S | G | 0 | 0 | 75 |
| 3 | A3 | 99 | 3.3 | ○ | ○ | ○ | S | S | G | 0 | 0 | 40 |
| 4 | A4 | 88 | 11 | × | × | × | - | - | - | 0 | 0 | >120 |
| 5 | UM1 | 72 | 0 | ○ | △ | x | G | G | - | 5 | 50 | >120 |
| 6 | UM2 | 88 | 0 | ○ | × | × | G | - | - | 7 | 65 | 100 |
| 7 | GM | 99 | 0 | × | × | × | - | - | - | 10 | 100 | 26 |

The support material Nos. 1 through 4 each comprising the hetero functional group-modified PVA-based resin had excellent flexibility as compared with the support material Nos. 5 - 7 comprising a PVA-based resin without a hetero functional group modification. From these results, it can be understood that the hetero functional group-modified PVA-based resin is suitable for a support material used for fused deposition modeling.

Further, the support material Nos. 1 through 3, which comprise a hetero functional group-modified PVA-based resin having from 0.5 to 10 mol% in hetero modification percentage, were excellent in water solubility, shape-forming property, and adhesive strength (in particular, adhesiveness to PLA).

Further, the support material comprising the PVA-based resin (A3) which is a hetero functional group-modified PVA-based resin using a side chain 1,2 diol-containing PVA-based resin as a raw material PVA-based resin had a higher reaction rate than a hetero functional group-modified PVA-based resin using an unmodified PVA as a raw material PVA-based resin. The former hetero functional group-modified PVA-based resin requires less amount of catalyst for modification, and therefore an amount of catalyst remained in the resulting support material may be reduced, which is advantageous.

## INDUSTRIAL APPLICABILITY

The support material of the present invention may be provided in the form of filament and may form a stable fused deposition modeled structure while retaining biodegradability and water solubility inherent in PVA-based resins. Therefore, the support material is useful for an auxiliary structure during the printing and convenient after the printing because of easy removal of the support material structure from the fused deposition modeled structure.

## DESCRIPTION OF CODE

1: Support structure
2: Model structure

## Claims

1. A support material for fused deposition modeling comprising a hetero functional group-modified polyvinyl alcohol-based resin having a structural unit represented by a general formula (1), wherein Rx represents an organic chain which may have a substituent, Z is a remained part of heteroatom-containing functional group from which a hydrogen atom is removed, and n represents a positive integer.

[Chemical formula 1]

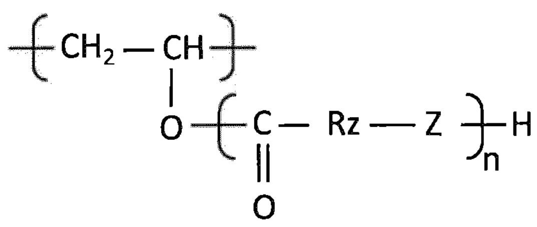

(1)

2. The support material for fused deposition modeling according to claim 1, wherein a content of the structural unit (1) in the hetero functional group-modified polyvinyl alcohol-based resin is from 0.5 to 40 mol%.

3. The support material for fused deposition modeling according to claim 1 or 2, wherein the hetero functional group-modified polyvinyl alcohol-based resin further contains a structural unit having a primary hydroxyl group in the side chain, excluding the structural unit (1).

4. The support material for fused deposition modeling according to any one of claims 1 to 3, wherein the hetero functional group-modified polyvinyl alcohol-based resin has a saponification degree of 65 to 99 mol%.

5. The support material for fused deposition modeling according to any one of claims 1 to 4, wherein Z is an oxygen atom.

**6.** A method of manufacturing a three-dimensional object comprising

extruding a molten support material for fused deposition modeling claimed in any one of claims 1 to 5 and a molten model material,
solidifying the model material and the support material to form a structure layer by layer; and
bringing an obtained fused deposition modeled structure into contact with water.

**7.** The manufacturing method according to claim 6, wherein the support material for fused deposition modeling is in the form of filament.

**8.** The manufacturing method according to claim 6 or 7, wherein the model material is a polylactic acid-based resin.

**9.** A fused deposition modeled structure including a support structure made of a support material claimed in any one of claims 1 to 5.

【FIG. 1】

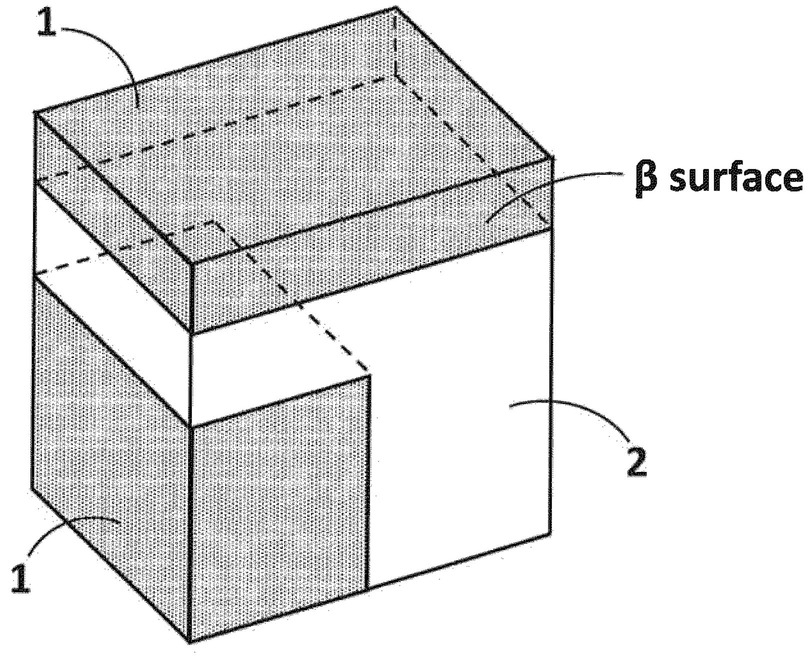

**INTERNATIONAL SEARCH REPORT**

International application No.
PCT/JP2020/043715

A. CLASSIFICATION OF SUBJECT MATTER
Int.Cl. C08F8/16(2006.01)i, B33Y80/00(2015.01)i, B29C64/112(2017.01)i, B29C64/40(2017.01)i, B33Y70/00(2020.01)i
FI: B29C64/112, C08F8/16, B33Y80/00, B29C64/40ZBP, B33Y70/00
According to International Patent Classification (IPC) or to both national classification and IPC

B. FIELDS SEARCHED
Minimum documentation searched (classification system followed by classification symbols)
Int.Cl. C08F8/16, B33Y80/00, B29C64/112, B29C64/40, B33Y70/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-155917 A (MITSUBISHI CHEMICAL HOLDINGS CORP.) 19 September 2019 (2019-09-19), all pages, all drawings | 1-9 |
| A | JP 2019-172924 A (MITSUBISHI CHEMICAL HOLDINGS CORP.) 10 October 2019 (2019-10-10), all pages, all drawings | 1-9 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 January 2021 | 02 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/043715

| | | |
|---|---|---|
| JP 2019-155917 A | 19 September 2019 | (Family: none) |
| JP 2019-172924 A | 10 October 2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014243295 A
- WO 2015182681 A
- JP 2018099788 A
- JP 2014024329 A